# FASCICULE DE BREVET EUROPEEN

(11) **EP 0 685 296 B1**
(45) Date de publication et mention de la délivrance du brevet: **10.02.1999**
(21) Numéro de dépôt: 95401257.1
(22) Date de dépôt: 31.05.1995
(51) Int. Cl.: B23Q 15/12, G05B 19/414

(54) **Machine pneumatique d'usinage**
Luftangetriebene Werkzeugmaschine
Air-driven machine-tool

(30) Priorité: 31.05.1994 FR 9406584
(43) Date de publication de la demande: 06.12.1995
(73) Titulaire: ETABLISSEMENTS RECOULES ET FILS (S.A), 77330 Ozoir-La-Ferrière (FR)
(72) Inventeur: Bureller, Michel, F-92160 Antony (FR)
(74) Mandataire: Viard, Jean

(56) Documents cités:
- EP-A- 0 078 420
- EP-A- 0 240 093
- EP-A- 0 470 425
- EP-A- 0 490 375
- WO-A-88/03672
- FR-A- 2 438 286
- FR-A- 2 671 994
- GB-A- 2 246 209
- JP-A-59 232 748
- US-A- 3 446 099
- US-A- 4 688 970
- TOOLING & PRODUCTION, vol. 46, no. 4, 1 Avril 1980 SOLON (US), pages 110-112, 'TRANSFER LINES MOVES TO EPROM'S'

## Description

La présente invention a pour objet une machine portative d'usinage à entraînement pneumatique du type dans lequel un moteur pneumatique entraîne, en rotation, une broche, pouvant recevoir différents outils, destinée en particulier, mais non exclusivement à l'industrie aéronautique.

De telles machines sont bien connues et utilisées, de préférence à un entraînement électrique, en raison de leurs performances puissance/poids mais également pour des raisons de sécurité. Dans les machines connues, un seul moteur pneumatique entraîne d'une part une broche en rotation et, par l'intermédiaire d'une vis et d'une noix, la même broche en translation.

L'inconvénient de ces machines résulte de ce qu'elles ne peuvent pratiquement tourner, et par suite avancer qu'à une seule vitesse, déterminée par la vitesse de rotation du moteur pneumatique. La vitesse de rotation de la broche et d'avance de celle-ci peut toutefois être modifiée par échange d'un jeu de pignons existant par un autre jeu donnant un rapport de vitesses différent. Ainsi une même machine doit avoir plusieurs motorisations et plusieurs jeux de pignons pour pouvoir changer de type d'application, par exemple pour passer d'une avance de 0,1 à 0,3 mm/tour, ce qui implique des montages et démontages ou la multiplication du nombre de machines.

Or, on utilise de plus en plus, notamment en aéronautique, des matériaux composites constitués par l'assemblage de couches de matériaux différents et notamment des complexes aluminium-carbone-titane. Chacun de ces matériaux requiert des conditions de travail différentes. Il en résulte des problèmes d'état de surface, de précision et/ou de temps de cycle.

La présente invention a pour objet de pallier cet inconvénient et de permettre la réalisation d'un outillage programmable pouvant travailler dans les conditions optimales quels que soient les matériaux à usiner et leur disposition dans un matériau complexe et notamment introduire une fonction d'avance variable de la broche, c'est à dire de l'outil par rapport à la pièce à usiner.

US-A-4 688 970 décrit une machine d'usinage notamment de matériaux multicouches à deux moteurs pneumatiques respectivement d'entraînement de la broche en rotation et de translation de la broche. Les deux moteurs pneumatiques sont pilotés par, chacun, un moteur électrique pas à pas régulant l'introduction d'air sous pression. Le moteur de rotation et le moteur de translation sont commandés, indépendamment l'un de l'autre par un circuit de commande relié à différents capteurs. Mais, en raison de leur structure, il est pratiquement impossible de commander instantanément des moteurs pneumatiques.

DE-U-93 185 82 décrit une machine pneumatique selon le préambule de la revendication 1 incluant un moteur électrique, reliée à un ordinateur contenant le programme d'usinage gérant lers paramètres de la machine. Mais la liaison entre l'ordinateur et la machine est permanente.

Selon l'invention, la machine pneumatique d'usinage comprenant un moteur pneumatique entraînant en rotation une broche porte-outils, portée par un chariot déplaçable longitudinalement, des capteurs mesurant la vitesse de rotation de la broche, le couple, la pression sur la broche et l'avance du chariot, un palpeur de profondeur, le chariot porteur de broche est monté sur une vis entraînée par un moteur électrique basse tension, une première, carte électronique de mémorisation de données, des moyens de lubrification par le centre de l'outil et de la broche, et des moyens de fixation de la machine sur une grille d'usinage est caractérisée en ce que la première carte est une carte électronique montée sur la machine et incluant deux microprocesseurs travaillant en parallèle, dont l'un, synchrone, pilote le moteur électrique d'avance et le second, asynchrone, gère les autres paramètres de la machine en fonction des données reçues des capteurs et d'un programme d'usinage inscrit dans une seconde carte électronique amovible reliée à la première carte, la première carte gérant l'avance de la broche en fonction de la vitesse de rotation de celle-ci, des données reçues des capteurs et des instructions mémorisées dans la seconde carte.

Dans un appareil de coupe, tel qu'une perceuse, il est connu que 9/10è de l'énergie est consacré à la coupe proprement dite le dixième restant servant à l'avance de l'outil. L'utilisation d'un second moteur électrique se justifie donc par le fait qu'il est de puissance limitée et, par suite de poids limité. Un moteur électrique peut être facilement piloté par une carte électronique incluant un microprocesseur, prenant en charge l'exécution d'un programme d'usinage. Il peut faire progresser l'avance de la broche par fractions de pas en découpant le courant d'alimentation.

D'autres caractéristiques et avantages de l'invention apparaîtront au cours de la description qui va suivre d'un mode particulier de réalisation, donné uniquement à titre d'exemple non limitatif, en regard des dessins qui représentent :

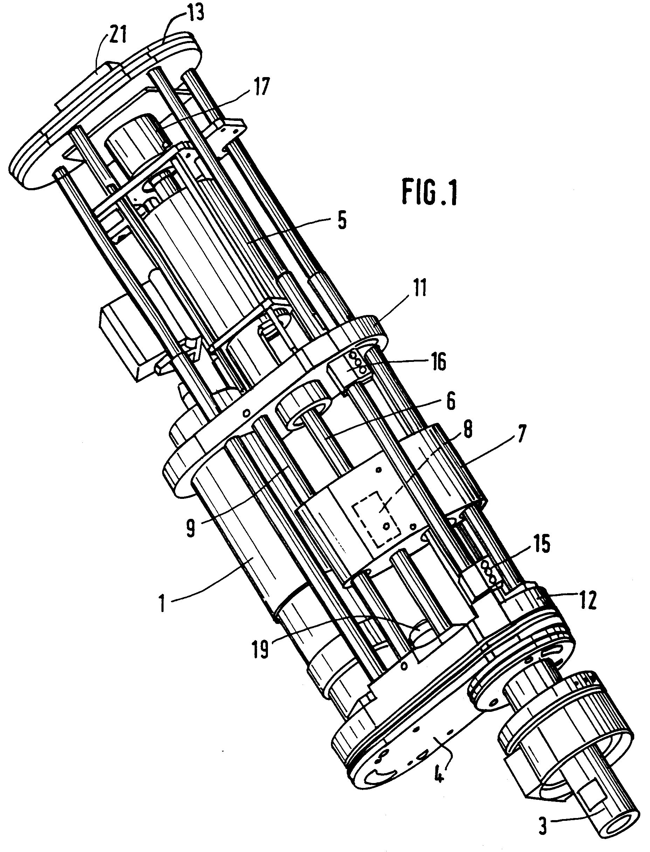

- La Figure 1, une vue en élévation d'une machine selon l'invention;

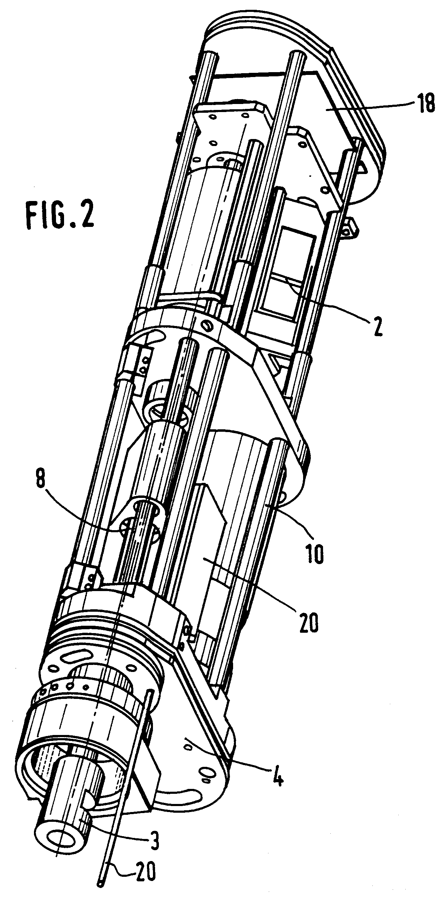

- la Figure 2, une vue en perspective par-dessus;
- la Figure 3, une schéma d'usinage complexe;
- la Figure 4, les positions de l'outil lors de l'usinage de la figure 3;
- la Figure 5, une vue en coupe de l'avant d'une machine selon l'invention.

Sur les figures, on voit qu'à l'intérieur d'un bâti constitué par trois platines 11, 12 et 13 réunies par des entretoises 10, sont montés un moteur pneumatique 1 et un moteur électrique 5 à avance pas à pas. Le moteur pneumatique est commandé par une électrovanne 2. Il entraîne en rotation par l'intermédiaire d'un jeu de pignons 4 une broche porte-outils 3 destinée à recevoir un forêt, une fraise, un alésoir ou tout outil complexe à plusieurs étages. La liaison entre l'arbre de sortie du moteur pneumatique 1 et la broche 3 est effectuée par l'intermédiaire du jeu de pignons 4 inclus dans un carter. Dans l'exemple représenté, la broche est à vitesse unique, mais de préférence, on incorpore entre le moteur pneumatique 1 et le train de pignons 4 un système de réduction crabotable de type connu à deux positions, piloté électriquement suivant le programme, ou un variateur linéaire (à bille ou autre système) également piloté électroniquement. Cela permet d'obtenir une gamme plus étendue de vitesses, souvent nécessaires avec les matériaux modernes.

A l'intérieur du bâti est également montée une carte électronique 18 à processeur double qui commande et contrôle le bon déroulement de l'avance de l'outil par rapport au programme préenregistré:
- le fonctionnement des périphériques tels que les sécurités, le départ de cycle, l'affichage, la lubrification, la sélection de vitesse, -
- le fonctionnement des périphériques tels que les sécurités, le départ de cycle, l'affichage, la lubrification, la sélection de vitesse,
- le pilotage du moteur électrique en fonction de paramètres tels que la vitesse de broche, la profondeur, la sécurité.

Ces paramètres sont délivrés à la carte notamment par un capteur tachymétrique 19 pour asservir le moteur d'avance à la vitesse du moteur pneumatique et par un capteur optoélectronique 17 pour assurer le contrôle du déplacement par le moteur 5 et la précision de déplacement. Ces éléments constituent la base de fonctionnement de la machine pour ce qui concerne la vitesse de broche à deux niveaux, à avance modulable,

Le moteur 5 fait tourner une broche d'avance 6 dont le pas est, par exemple, de un millimètre. Le moteur pas à pas peut toutefois être remplacé par un moteur à courant continu ou par tout autre moteur électrique basse tension. La broche 6 pousse le chariot 7 par l'intermédiaire d'une noix 8 à recirculation de rouleaux, la noix 8 étant guidée par deux axes-entretoises 9 qui maintiennent la rigidité de l'ensemble du système avec d'autres entretoises 10 fixées sur les platines 11,12,13 du bâti. On peut également gagner de l'espace en mettant le moteur 5 en parallèle avec la broche 6, le moteur entraînant la broche par l'intermédiaire de poulies et courroies crantées. Ceci permet la réalisation d'un compartiment mécanique avec chariot, broche etc. et d'un compartiment électronique.

Le chariot 7 est fixé sur la broche 3 et entraîne celle-ci en translation dès que le moteur 5 se met à tourner. Ces déplacements sont contrôlés par deux capteurs 15,16 de position, le capteur 16 servant au positionnement du zéro de référence, départ de cycle et comptage.

Un capteur rotatif incrémental 17 est fixé en bout de l'arbre du moteur 5 et transmet ses informations à la carte électronique de traitement 18. Un tachymètre 19 placé sur un pignon d'entraînement du moteur pneumatique donne la valeur de la vitesse de rotation de la broche à la même carte électronique. Ce tachymètre peut être remplacé par un roulement à effet HALL ou par tout autre détecteur de vitesse.

Suivant le programme installé dans ses deux microprocesseurs, la carte électronique 18 scrute le déplacement effectué par la broche, compare avec ses consignes d'avance programmée; scrute la vitesse de rotation de la broche par le tachymètre et les sécurités et module son avance :
- si la profondeur de consigne est atteinte;
- si le microprocesseur constate que la vitesse de broche est inférieure à la valeur qu'elle doit avoir.

La carte électronique 18 est basée sur le principe des machines parallèles. Les deux microprocesseurs embarqués de technologie RISC (Reduced Instructions Set Computer) sont respectivement synchrone et asynchrone. Le microprocesseur synchrone pilote le moteur 5 alors que le microprocesseur asynchrone gère l'environnement homme-machine c'est à dire qu'il prend en charge les paramètres autres que ceux de la commande de rotation du moteur synchrone, c'est à dire l'exécution du programme, la gestion des capteurs, la gestion des sécurités les arrêts et départs etc.
Le moteur 5 est piloté selon un algorithme à pas variable avec pilotage en demi pas à basse vitesse, au pas en vitesse intermédiaire et au-dessus du pas pour les avances et retours rapides (ces paramètres pouvant être adaptés suivant les cas). Le microprocesseur peut découper l'intensité pour obtenir un fonctionnement par fractions de pas.

Une carte programmable 21 distincte de la carte pilotage/puissance mais connectée à celle-ci se monte et se démonte à l'arrière de la machine. Sa fixation est rendue étanche par un boîtier lui-même étanche à démontage rapide. C'est cette carte qui mémorise les paramètres représentatifs d'un cycle complet de fabrication (vitesses, avances, profondeurs, débourrage, lubrification et autre variables). Cette carte est programmée par l'intermédiaire d'un micro-ordinateur via une liaison série RS 232. Lors d'un réglage avant mise en service sur chaîne de fabrication, le régleur transfert les données, les modifie à volonté . Il contrôle les résultats sur banc et finalement les mémorise. La machine en tiendra compte et modulera ses déplacements en conséquence lors de son travail sur poste.

L'air d'échappement du moteur pneumatique 1 est, de préférence, réinjecté dans le corps de la machine à travers un filtre pour mettre l'intérieur du carter en surpression au cours du fonctionnement, pour éviter les infiltrations et ventiler les composants électroniques de puissance montés sur des radiateurs.

Une lubrification axiale est effectuée dans la broche 3 par un tube plongeur coulissant dans la broche, I'étanchéité étant assurée par des joints toriques Cette lubrification est également pilotée par le programme par l'intermédiaire d'électrovannes permettant des combinaisons en fréquence et en durée par rapport à une profondeur..

Un contrôle du verrouillage de la machine sur une grille de perçage est effectué par un positionnement d'un capteur de position ( non représenté) sur le mécanisme de verrouillage de la grille.

Un palpeur axial de position 20 est également installé dans le corps de la machine. Le canon palpeur, transmet une information précise de la position de l'outil par rapport à la pièce à percer et au palpeur axial. Cette information est transmise à la carte microprocesseur 18 et compare sa valeur à une valeur de réglage préalablement enregistrée. La machine corrige son déplacement en conséquence.

L'outillage, élément démontable par rapport à la machine, comprend des trous sur un secteur de pièce qui seront "lus" par des capteurs placés dans le corps de la machine. Suivant les combinaisons possibles des trous, un code d'outillage peut être interprété par la machine et autoriser le fonctionnement de celle-ci.

Ces différents paramètres permettent une modularité de fonctionnement incomparablement supérieure à celui des machines classiques qui ne dépend que du chargement ou du déchargement d'une carte programme effectué en quelques secondes et d'une motorisation pneumatique à, par exemple, deux vitesses fixes pilotables électroniquement. La vitesse d'avance travail de l'outil est elle-même linéaire et varie entre 0,035 et 0,3 mm/tour. l'ensemble de ces paramètres donne une indication exacte de la profondeur contrôlée en permanence. Il est ainsi possible d'avancer plus ou moins rapidement dans un matériau donné, faire des cycles de débourrage, effectuer des opérations ponctuelles de sortie de broche sans rotation.

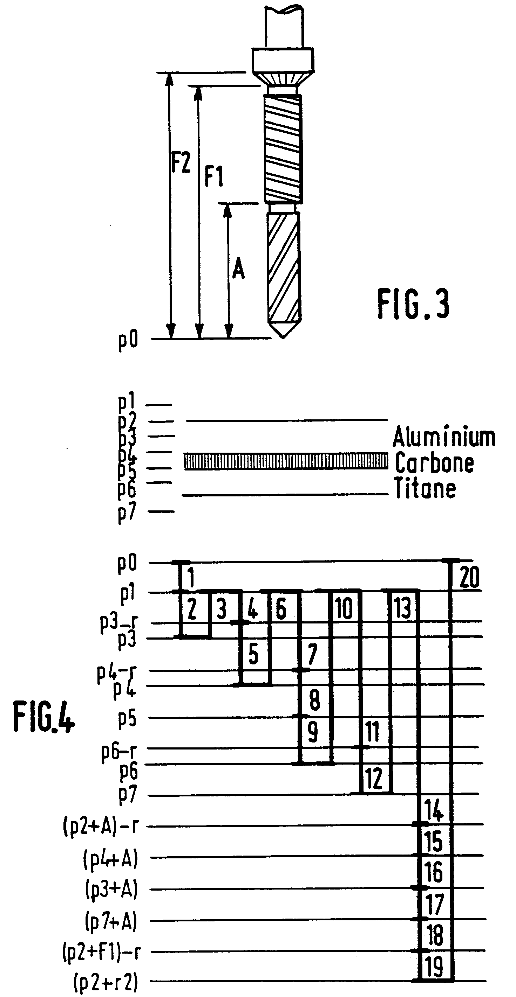

La figure 3 qui est un exemple d'application d'un outillage selon l'invention, représente, à sa partie supérieure un outil complexe 22 comprenant à sa partie inférieure un forêt de hauteur A, suivi d'un alésoir de hauteur F1 et d'une partie fraisureuse de hauteur F2. Cet outil permet d'effectuer le perçage, l'alésage et le fraisurage de la partie supérieure du trou.

Le matériau à percer est un complexe comprenant de haut en bas, une couche d'aluminium, une couche de fibres de carbone et une couche de titane, chacun de ces matériaux devant être travaillé à des vitesses de rotation et d'avance de l'outil différentes. Dans l'exemple représenté, les vitesses d'avance pour le perçage dans les trois couches sont respectivement de 0,3 mm/tour pour l'aluminium, de 0,5 mm/tour pour le carbone et de 0,06 mm/tour pour le titane.

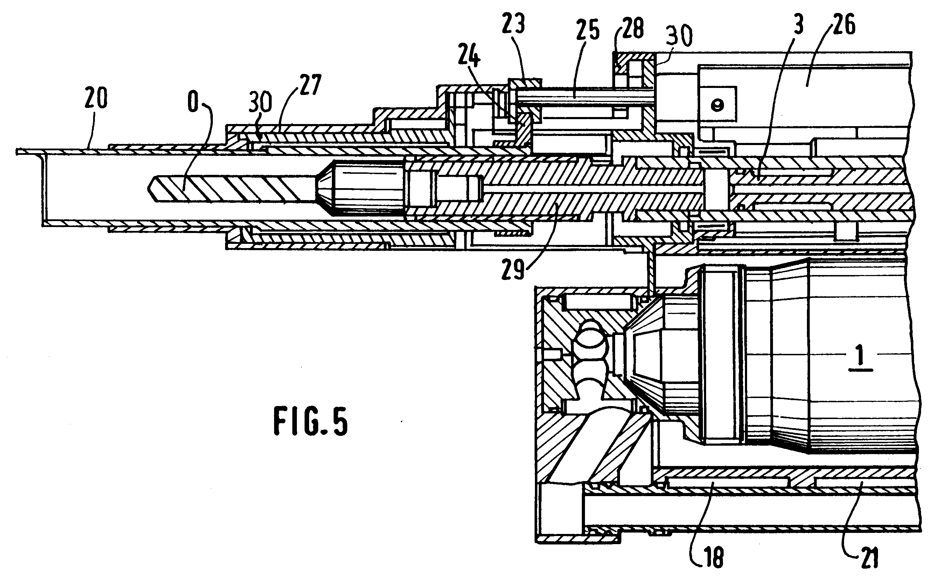

La figure 4 représente la position de la pointe de l'outil. Les numéros apparaissant sur cette figure sont les numéros de blocs de programmes.

A l'origine, la pointe de l'outil est au-dessus de la pièce à usiner dans une position p0, les vitesses de rotation et d'avance sont nulles. Dans un premier temps, l'outil avance rapidement pour prendre la position p1 qui est extérieure mais voisine de la pièce. La première opération consiste dans le perçage de l'aluminium, l'outil descendant dans la position p3 (avance 1). Un retour rapide en p1 permet le débourrage de l'outil. Puis l'outil avance rapidement en p3 (moins le retrait r) et il reprend le perçage de l'aluminium (avance 1). Il revient ensuite en p1 en vue de son débourrage. Il avance ensuite rapidement en p4 moins le retrait.

L'aluminium est percé. L'étape suivante consiste dans le perçage du carbone (avance 2 supérieure à l'avance 1). L'outil avance en p5 et perce le carbone et avance ensuite en P6 où il perce le titane ( avance 3). Il effectue alors un retour rapide en p1 pour son débourrage et reprend ensuite son avance en p6 - retrait, position à partir de laquelle il reprend le perçage du titane (avance 3). Après quoi il effectue à nouveau un retour rapide de débourrage en p1.

Une avance rapide en p2+A-retrait permet au cours de l'avance ultérieure d'aléser l'aluminium, (avance 4) puis en p4+A d'aléser le carbone (avance 5), puis en p5+A le titane (avance 6). Le fraisurage de l'aluminium est alors effectué en faisant avancer l'outil en p2+F2 (avance 7).

L'outil revient alors en position p0 et le microprocesseur arrête la rotation de la broche. Le passage dans cette position est immédiat, si la vitesse de rotation de la broche sort de sa plage de tolérance. Comme cela ressort de l'exemple ci-dessus, il a été nécessaire d'utiliser sept vitesses d'avance de l'outil correspondant respectivement aux usinages et matériaux différents. Seule une commande électronique permet d'obtenir ces variations.

La figure 5 représente la partie avant d'une machine selon l'invention. On retrouve sur cette figure le moteur pneumatique 1, disposé à l'extérieur du carter proprement dit, les cartes électroniques 18 et 21, la broche 3 d'entraînement en rotation et le palpeur axial de position 20 qui, dans ce cas, est constitué par un canon mobile disposé à l'intérieur d'un canon fixe 30. Le canon fixe est lui-même entouré partiellement par une bague 27 de verrouillage de la machine sur une grille d'usinage (non représentée) comme décrit dans FR-A-2 680 329. La bague 27 est entraînée en rotation par la bielle tige d'un vérin pneumatique représenté à l'avant du moteur 1 (non référencé).

Le canon palpeur 20 porte à sa partie arrière un ergot 24 qui est solidarisé par un étrier 24 pouvant pivoter sur la tige 25 d'un vérin pneumatique 26 servant à la rétraction du canon 20 lors de l'introduction de la machine sur la grille d'usinage. Un outil O est monté sur la broche 3, à l'intérieur des canons fixe 30 et palpeur 20 par l'intermédiaire d'une rallonge de broche 29.

Le canon fixe 30 est monté sur le châssis de la machine au moyen d'un étrier 28 et d'un pion anti-rotation ( non représenté). Le simple dévissage partiel de quelques vis permet ainsi de démonter très simplement l'ensemble de l'outillage : canons 20,30, bague 27, outil O et rallonge-broche 29 en vue de lui substituer un autre outillage.

## Revendications

1. Machine pneumatique d'usinage, comprenant un moteur pneumatique (1) entraînant en rotation une broche porte-outils (3), portée par un chariot déplaçable longitudinalement, des capteurs mesurant la vitesse de rotation de la broche, le couple, la pression sur la broche et l'avance du chariot, un palpeur de profondeur (20), le chariot (7) porteur de broche (3) est monté sur une vis entraînée par un moteur électrique basse tension (5), une première carte électronique de mémorisation de données, des moyens de lubrification par le centre de l'outil et de la broche, et des moyens (27) de fixation de la machine sur une grille d'usinage,
caractérisée en ce que
la première carte est une carte électronique (18) montée sur la machine et incluant deux microprocesseurs travaillant en parallèle, dont l'un, synchrone, pilote le moteur électrique d'avance (5) et le second, asynchrone, gère les autres paramètres de la machine en fonction des données reçues des capteurs et d'un programme d'usinage inscrit dans une seconde carte électronique (21) amovible reliée à la première carte, la première carte (18) gérant l'avance de la broche (3) en fonction de la vitesse de rotation de celle-ci, des données reçues des capteurs (15, 16, 17, 19) et des instructions mémorisées dans la seconde carte (21).

2. Machine pneumatique selon la revendication 1, caractérisée en ce qu'un capteur tachymétrique (19) est disposé sur le jeu de pignons (4) reliant l'arbre du moteur (1) à la broche (3), un capteur rotatif incrémental (17), disposé en bout de l'arbre moteur (5), contrôlant le déplacement axial de ladite broche.

3. Machine pneumatique selon l'une des revendications 1 ou 2, caractérisée en ce qu'un palpeur de profondeur (20) fait saillie en avant de la machine pour venir porter contre la pièce à usiner et mesurer la position (p) de l'outil par rapport à celle-ci, le palpeur de profondeur (20) étant connecté à un vérin de rétraction (26) par l'intermédiaire d'un ergot (24) et d'un étrier (23).

4. Machine pneumatique selon l'une quelconque des revendications précédentes, caractérisée en ce que la broche d'avance (6) de sortie du moteur électrique entraîne une noix (8) à recirculation de rouleaux, la translation de la noix étant détectée par des capteurs (15, 16) de position pour le calage à zéro et la fin de course.

5. Machine pneumatique selon l'une quelconque des revendications précédentes, caractérisée en ce que l'air d'échappement est recyclé, après fixation, dans le carter de la machine pour assurer une surpression à l'intérieur de celui-ci.

6. Machine pneumatique selon l'une quelconque des revendications précédentes, caractérisée en ce que le verrouillage de la machine sur la grille d'usinage par la bague (27), par piston-crémaillère, est piloté électroniquement.

7. Machine pneumatique selon l'une quelconque des revendications précédentes, caractérisée en ce que l'outillage (20, 30, 32, 29) est fixé sur le châssis de la machine par un étrier (28).

## Claims

1. Pneumatic machine tool, comprising a pneumatic motor (1) rotating a tool-holder spindle (3) carried by a longitudinally displaceable carriage, sensors measuring the speed of rotation of the spindle, the torque, the pressure on the spindle and the advance of the carriage, a depth detector (20), the carriage (7) carrying the spindle (3) being mounted on a screw driven by a low-voltage electrical motor (5), a first electronic data storage card, means of lubrication by way of the centre of the tool and of the spindle, and means (27) for securing the machine to a machining grid, characterised in that the first card is an electronic card (18) mounted on the machine and including two microprocessors operating in parallel, one of which, which is synchronous, controls the electrical advance motor (5) and the second of which, which is asynchronous, manages the other parameters of the machine as a function of the data received from the sensors and as a function of a machining programme recorded on a second electronic card (21) which is removable and which is connected to the first card, the first card (18) managing the advance of the spindle (3) as a function of the speed of rotation thereof, as a function of the data received from the sensors (15, 16, 17, 19) and as a function of the instructions stored on the second card (21).

2. Pneumatic machine according to claim 1, characterised in that a tachometric sensor (19) is arranged on the set of pinions (4) connecting the shaft of the motor (1) to the spindle (3), an incremental rotary sensor (17), arranged at the end of the motor shaft (5), monitoring the axial displacement of the spindle.

3. Pneumatic machine according to either claim 1 or claim 2, characterised in that a depth detector (20) projects from the front of the machine to bear against the part to be machined and to measure the position (p) of the tool relative thereto, the depth detector (20) being connected to a retracting jack (26) by means of a projection (24) and a stirrup (23).

4. Pneumatic machine according to any one of the preceding claims, characterised in that the output advance shaft (6) of the electrical motor drives a nut (8) having recirculating rollers, the translation of the nut being detected by position sensors (15, 16) for adjustment to zero and limit of travel.

5. Pneumatic machine according to any one of the preceding claims, characterised in that the outgoing air is recycled, after securing, into the casing of the machine in order to ensure excess pressure inside the casing.

6. Pneumatic machine according to any one of the preceding claims, characterised in that the locking of the machine to the machining grid by means of the ring (27), by rack piston, is controlled electronically.

7. Pneumatic machine according to any one of the preceding claims, characterised in that the tool outfit (20, 30, 32, 29) is secured to the frame of the machine by means of a stirrup (28).

## Patentansprüche

1. Pneumatisch angetriebene Werkzeugmaschine mit einem pneumatischen Motor (1) zum Drehen einer Werkzeughalterspindel (3), die durch einen in Längsrichtung verschiebbaren Schlitten gehaltert ist, Sensoren zum Messen der Rotationsgeschwindigkeit der Spindel, des Moments und des Drucks auf die Spindel und des Vorrückens des Schlittens, einem Tiefenfühler (20), wobei der Schlitten (7), der die Spindel (3) haltert, auf einer Schnecke angebracht ist, welche von einem elektrischen Niederspannungsmotor (5) antreibbar ist, einer ersten elektronischen Karte zum Speichern von Daten, Schmiermitteln durch das Zentrum des Werkzeugs und der Spindel und Mitteln (27) zum Befestigen der Maschine auf einem Werkzeuggitter,
dadurch gekennzeichnet, daß
die erste Karte eine elektronische Karte (18) ist, welche auf der Maschine angebracht ist und zwei Mikroprozessoren aufweist, die parallel arbeiten, von denen der eine den elektrischen Motor zum Vorrücken (5) synchron steuert und der zweite die anderen Parameter der Maschine im Betrieb von den empfangenen Daten der Sensoren und von einem Werkzeugprogramm, das in eine zweite elektronische Karte (21) eingeschrieben ist, die abnehmbar an der ersten Karte gehaltert ist, asynchron steuert, wobei die erste Karte (18) das Vorrücken der Spindel (3) im Betrieb der Drehgeschwindigkeit derselben, die empfangenen Daten der Sensoren (15, 16, 17, 19) und die in der zweiten Karte (21) gespeicherten Anweisungen steuert.

2. Pneumatische Maschine nach Anspruch 1, dadurch gekennzeichnet, daß ein Geschwindigkeitssensor (19) auf der Zahnradgruppe (4), welche an der Welle des Motors (1) an der Spindel (3) angebracht ist, und ein inkrementaler Drehgeber (17), welcher am Ende der Welle des Motors (5) angebracht ist, zum Steuern der axialen Verschiebung der Spindel angeordnet sind.

3. Pneumatische Maschine nach einem der Ansprüche 1 oder 2, dadurch gekennzeichnet, daß der Tiefenfühler (20) eine Auskragung vor der Maschine bildet und gegen das Werkstück drückbar ist, um die Position (p) des Werkzeuge bezüglich desselben zu messen, wobei der Tiefenfühler (20) mit einem Rücksteller (26) unter Zwischenschaltung eines Vorsprungs (24) und eines Bügels (23) verbunden ist.

4. Pneumatische Maschine nach einem der vorhergehenden Ansprüche, dadurch gekennzeichnet, daß die Vorrückspindel (6) am Ausgang des elektrischen Motors eine Nuß (8) zur Rezirkulation von Walzen antreibt, wobei die Verschiebung der Nuß von Positionssensoren (15, 16) zum Nullabgleich am Ende des Laufe erfassbar ist.

5. Pneumatische Maschine nach einem der vorhergehenden Ansprüche, dadurch gekennzeichnet, daß die Abgasluft hinter der Befestigung in das Gehäuse der Maschine zurückführbar ist, um einen Überdruck im Inneren desselben zu gewährleisten.

6. Pneumatische Maschine nach einem der vorhergehenden Ansprüche, dadurch gekennzeichnet, daß die Verriegelung der Maschine auf dem Werkzeuggitter durch einen Ring (27) durch einen Zahnstangenkolben elektronisch steuerbar ist.

7. Pneumatische Maschine nach einem der vorhergehenden Ansprüche, dadurch gekennzeichnet, daß das Werkzeug (20, 30, 32, 29) auf dem Chassis der Maschine über einen Bügel (28) befestigt ist.
